# EUROPEAN PATENT APPLICATION

(11) **EP 4 397 469 A1**
(43) Date of publication of application: **10.07.2024**
(21) Application number: 23861644.5
(22) Date of filing: 29.06.2023
(51) Int. Cl.: B29C 65/00, H01M 50/105, B29C 65/18, B29C 65/24, B29C 65/48, B29L 31/00

(54) **SEALING DEVICE FOR SECONDARY BATTERY**

(30) Priority: 07.11.2022 KR 20220147040
(71) Applicant: LG ENERGY SOLUTION, LTD., Seoul 07335 (KR)
(72) Inventor: GWAK, Myeongjun, Daejeon 34122 (KR)
(74) Representative: Goddar, Heinz J.
(86) International application number: PCT/KR2023/009121
(87) International publication number: WO 2024/101574

(57) **Abstract**

The present invention relates to an apparatus for sealing a secondary battery, which manufactures a secondary battery by sealing an outer peripheral surface of a pouch casing embedded with an electrode assembly, the apparatus including a sealing tool configured to seal the outer peripheral surface of the pouch casing and having a thermal insulation coating layer positioned on a lateral surface of the sealing tool, a pair of sealing blocks configured to heat the sealing tool or support the pouch casing, and a heating member positioned in the sealing block and configured to heat the sealing block.

## Description

### [Technical Field]

This application claims priority to and the benefit of Korean Patent Application No. 10-2022-0147040 filed with the Korean Intellectual Property Office on November 7, 2022, the entire contents of which are incorporated herein by reference.

The present invention relates to an apparatus for sealing a secondary battery.

### [Background Art]

In general, a secondary battery refers to a battery that may be charged and discharged, unlike a primary battery that cannot be charged. The secondary batteries are widely used in cutting-edge electronic device fields such as phones, laptop computers, and camcorders.

The stability of the secondary battery may be ensured by performing a stability test that compresses one surface of the secondary battery with a pressing machine and then measures an internal short circuit.

Depending on shapes of battery casings, the secondary batteries are classified into a cylindrical or angular secondary battery in which an electrode assembly is embedded in a cylindrical or angular metal can, and a pouch casing-type secondary battery in which an electrode assembly is embedded in a pouch casing-type casing provided in the form of a laminated aluminum sheet.

During a process of manufacturing a pouch casing-type battery, an electrode assembly is accommodated in a pouch casing, and then the pouch casing is sealed by pressing and heating an outer peripheral surface of the pouch casing by using a sealing tool from above and below the pouch casing.

In this case, a region of the sealing tool, which seals a portion where an electrode lead is positioned, is positioned inside the sealing tool and heated to a temperature relatively higher than a temperature outside the sealing tool. For this reason, a sealing portion is not sealed with a uniform temperature, which causes a problem in that uniform sealing quality cannot be ensured.

Further, because the sealing tool is configured to discharge heat therein to the outside through a surface thereof, a large amount of time is required to heat and seal the next pouch casing after the previous pouch casing is sealed. Therefore, there is a limitation in shortening the time it takes to process the secondary battery.

### [Detailed Description of the Invention]

### [Technical Problem]

The present invention has been made in an effort to solve the above-mentioned problem, and an object of the present invention is to provide an apparatus for sealing a secondary battery, which is capable of preventing a temperature of a sealing tool from being diffused to the outside.

### [Technical Solution]

An embodiment of the present invention provides an apparatus for sealing a secondary battery, which manufactures a secondary battery by sealing an outer peripheral surface of a pouch casing embedded with an electrode assembly, the apparatus including: a sealing tool configured to seal the outer peripheral surface of the pouch casing and having a thermal insulation coating layer positioned on a lateral surface of the sealing tool; a pair of sealing blocks configured to heat the sealing tool or support the pouch casing; and a heating member positioned in the sealing block and configured to heat the sealing block.

The embodiment of the present invention provides the apparatus for sealing a secondary battery in which the secondary battery may include an electrode lead extending to the outside of the pouch casing, and the sealing tool may include: a pouch casing sealing portion configured to press and heat a pouch casing region in which the electrode lead is not positioned; and a lead sealing portion configured to press and heat a region in which the electrode lead is positioned.

The embodiment of the present invention provides the apparatus for sealing a secondary battery in which a height of the lead sealing portion may be lower than a height of the pouch casing sealing portion.

The embodiment of the present invention provides the apparatus for sealing a secondary battery in which the thermal insulation coating layer positioned on the lead sealing portion may be thinner than the thermal insulation coating layer positioned on the pouch casing sealing portion.

The embodiment of the present invention provides the apparatus for sealing a secondary battery in which the thermal insulation coating layer may be positioned on an outer surface of the sealing block, except for a region in which the sealing tool is positioned.

The embodiment of the present invention provides the apparatus for sealing a secondary battery in which the thermal insulation coating layer may include a bonding layer provided on one surface thereof and bonded to the sealing tool.

The embodiment of the present invention provides the apparatus for sealing a secondary battery in which the sealing block may have a space into which the heating member is inserted.

The embodiment of the present invention provides the apparatus for sealing a secondary battery in which the heating member may be provided in the form of a rod or coil.

The embodiment of the present invention provides the apparatus for sealing a secondary battery in which the sealing tool may be positioned on one surface of any one of or both the pair of sealing blocks.

The embodiment of the present invention provides the apparatus for sealing a secondary battery in which any one of or both the pair of sealing blocks may further include a movable member configured to move the sealing block upward or downward.

### [Advantageous Effects]

According to apparatus for sealing a secondary battery according to the embodiment of the present invention, the thermal insulation coating layer may be positioned on the outer surface of the sealing tool that is not in contact with the pouch casing, thereby minimizing a degree to which the heat in the sealing tool from being diffused to the outside.

Further, according to the apparatus for sealing a secondary battery, the thermal insulation coating layer, which is positioned on the sealing tool for sealing the region in which the pouch casing and the lead are stacked, and the thermal insulation coating layer, which is positioned on the sealing tool for sealing the region in which only the pouch casing is stacked, have different thicknesses. Therefore, it is possible to uniformize the temperature of the sealing tool and easily ensure the uniform sealing quality.

### [Brief Description of Drawings]

FIG. 1 is a perspective view of an apparatus for sealing a secondary battery according to an embodiment of the present invention.
FIG. 2 is an exploded perspective view of the apparatus for sealing a secondary battery according to the embodiment of the present invention.
FIG. 3 is a top plan view of the apparatus for sealing a secondary battery according to the embodiment of the present invention.
FIG. 4A is a front view of the apparatus for sealing a secondary battery according to the embodiment of the present invention, and FIG. 4B is a front view illustrating a state in which the apparatus for sealing a secondary battery according to the embodiment of the present invention presses a secondary battery.
FIG. 5 is a perspective view of an apparatus for sealing a secondary battery according to another embodiment of the present invention.
FIG. 6 is a cross-sectional view illustrating a state in which heat generated by a heating member according to the embodiment of the present invention is transferred to a sealing block and a sealing tool.
FIG. 7 is a schematic view illustrating a structure of a thermal insulation coating layer according to the embodiment of the present invention.

### [Explanation of Reference Numerals and Symbols]

100: Apparatus for sealing secondary battery
1: Pouch casing
2: Electrode lead
10: Sealing tool
11: Pouch casing sealing portion
12: Lead sealing portion
20: Sealing block
30: Heating member
40: Thermal insulation coating layer
41: Bonding layer
42: Thermal insulation layer
50: Movable member

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, the drawings are intended to illustratively describe the present invention, and the scope of the present invention is not limited by the drawings.

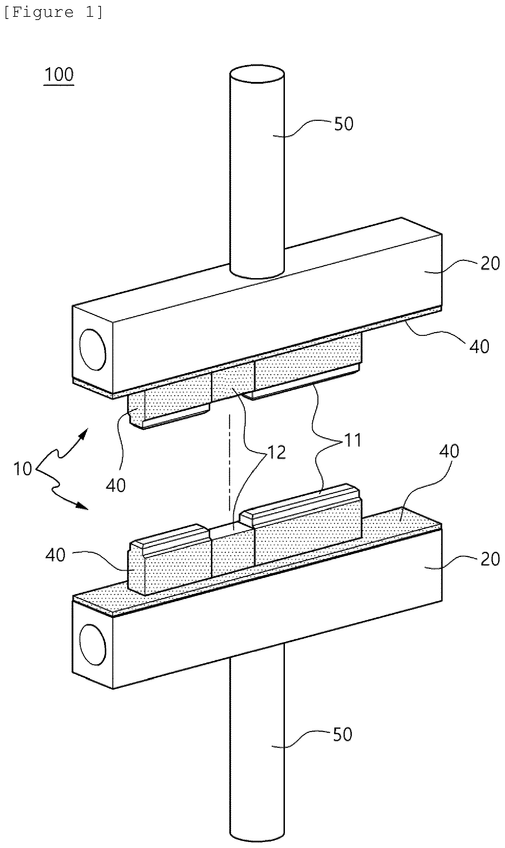

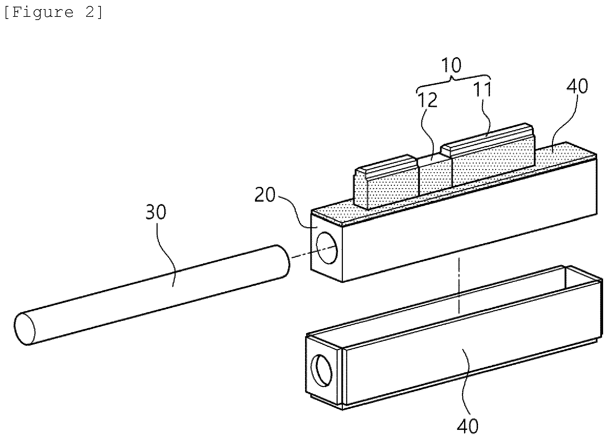

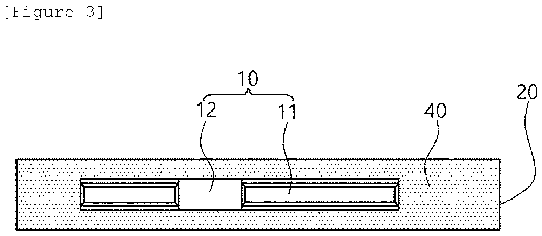

FIG. 1 is a perspective view of an apparatus 100 for sealing a secondary battery according to an embodiment of the present invention, FIG. 2 is an exploded perspective view of the apparatus 100 for sealing a secondary battery according to the embodiment of the present invention, and FIG. 3 is a top plan view of the apparatus for sealing a secondary battery according to the embodiment of the present invention.

The apparatus 100 for sealing a secondary battery according to the present invention includes sealing tools 10, sealing blocks 20, and heating members 30.

The apparatus 100 for sealing a secondary battery serves to seal an outer peripheral surface of a pouch casing 1 embedded with an electrode assembly (not illustrated). In this case, the secondary battery may be a pouch casing-type secondary battery and include the electrode assembly and the pouch casing 1.

The electrode assembly may include a positive electrode, a negative electrode, and a separator. The electrode assembly may be accommodated in a pouch casing while occupying a maximum volume in the pouch casing to increase an energy density. Therefore, the secondary battery may be implemented as a secondary battery having a high capacity and a high output with a size remaining the same.

The pouch casing 1 includes an accommodation space capable of accommodating the electrode assembly, and a sealing space positioned around the accommodation space and sealed in a state in which only the pouch casing 1 is stacked or electrode leads 2 to be described below are stacked together with the pouch casing 1. The accommodation space may be provided such that the electrode assembly occupies a maximum volume. The accommodation space may have a volume or area equal to a volume of the electrode assembly.

Further, the secondary battery may include the electrode leads 2 extending to the outside of the pouch casing 1. The electrode lead 2 may protrude to the outside through a periphery of the pouch casing 1.

In more detail, the electrode assembly may include a negative electrode tab and a positive electrode tab formed by extending current collecting plates of a negative electrode and a positive electrode. The electrode leads 2 may extend from the negative electrode tab and the positive electrode tab and protrude to the outside through the sealing space of the pouch casing 1. Therefore, the electrode leads 2 may be positioned in the pouch casing 1, i.e., in the sealing space of the pouch casing 1.

The apparatus 100 for sealing a secondary battery according to the present invention may seal the sealing space of the pouch casing 1 by heating and pressing the sealing space of the pouch casing 1.

The sealing tool 10 seals the periphery of the pouch casing 1. A contact surface of the sealing space of the pouch casing 1 is coated with a sealant. The sealing tool 10 may bond (seal) the pouch casing 1 of the sealing space by pressing and heating the sealing space of the pouch casing 1.

The sealing tool 10 may include a pouch casing sealing portion 11 configured to press and heat a region in which only the pouch casing 1 is stacked without the electrode lead 2, and a lead sealing portion 12 configured to press and heat a region in which the electrode lead 2 is positioned in the pouch casing 1.

The electrode leads 2 may be positioned on one side or two facing sides among four sides of the electrode assembly. Therefore, a sealing region of the pouch casing 1 may include a first sealing region including the electrode leads 2, and a second sealing region that does not include the electrode lead 2.

A structure of the sealing tool 10 for sealing the first sealing region and a structure of the sealing tool 10 for sealing the second sealing region may be different from each other. The sealing tool 10 for sealing the first sealing region may include both the pouch casing sealing portion 11 and the lead sealing portion 12. The sealing tool 10 for sealing the second sealing region may include only the pouch casing sealing portion 11.

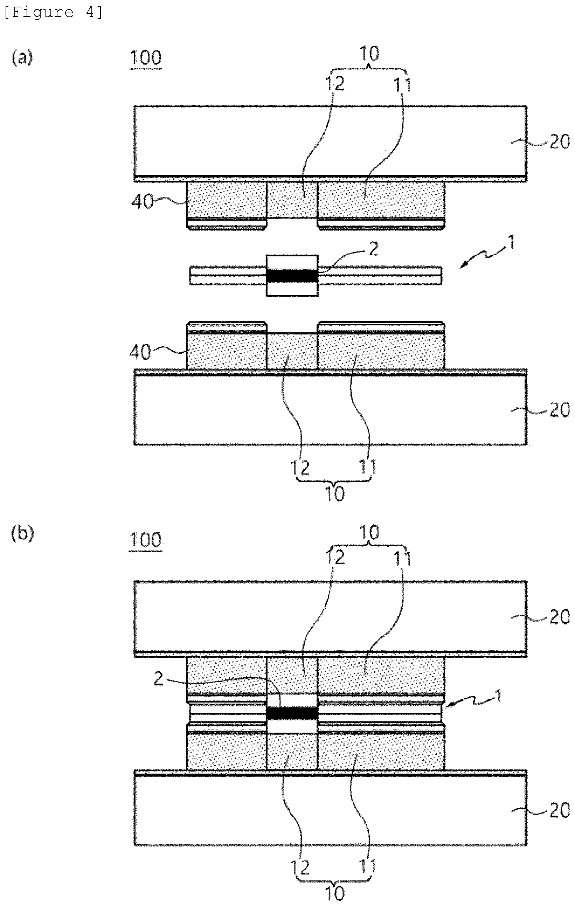

FIG. 4A is a front view of the apparatus 100 for sealing a secondary battery according to the embodiment of the present invention, and FIG. 4B is a front view illustrating a state in which the apparatus 100 for sealing a secondary battery according to the embodiment of the present invention presses a secondary battery.

A height of the lead sealing portion 12 may be lower than a height of the pouch casing sealing portion 11. In this case, the height means a distance between one surface of the sealing tool 10, which is in contact with the sealing block 20, and a surface opposite to one surface.

The electrode lead 2 has a predetermined thickness. In the sealing region, a portion where the electrode lead 2 is positioned may have a larger thickness than a portion where the electrode lead 2 is not positioned. Therefore, the lead sealing portion 12 has a lower height than the pouch casing sealing portion 11, such that the lead sealing portion 12 may come into contact with the sealing region that is thick because of the electrode lead 2. That is, the lead sealing portion 12 may be provided at a height lower than the height of the pouch casing sealing portion 11 by the thickness of the electrode lead 2.

Further, when the apparatus 100 for sealing a secondary battery presses the pouch casing 1 with the same pressure, the pouch casing sealing portion 11 and the lead sealing portion 12 may be pressed by the same pressure even though the sealing regions have different thicknesses because of the electrode leads 2. Therefore, it is possible to ensure the same sealing quality for both the first sealing region and the second sealing region.

A thermal insulation coating layer 40 may be positioned on a lateral surface of the sealing tool 10. In this case, the lateral surface of the sealing tool 10 means a surface perpendicular to the surface that comes into contact with the pouch casing 1. In other words, the thermal insulation coating layer 40 may be positioned on an outer surface excluding the surface opposite to the surface that is in contact with the sealing block 20.

The heat in the sealing tool 10 may be discharged to the outside before, during, and after the process of sealing the pouch casing 1. The thermal insulation coating layer 40 may prevent the heat in the sealing tool 10 from being discharged to the outside, which provides an economic effect of reducing the supply amount of heat supplied to seal the secondary battery.

The thermal insulation coating layers 40 positioned on the lateral surface of the pouch casing sealing portion 11 and the lateral surface of the lead sealing portion 12 of the sealing tool 10 may have different thicknesses.

In the embodiment, the pouch casing sealing portion 11, the lead sealing portion 12, and the pouch casing sealing portion 11 of the sealing tool 10 may be provided in this order in a length direction of the sealing block 20. In this case, the lead sealing portion 12 positioned between the pouch casing sealing portions 11 has a higher temperature than the pouch casing sealing portion 11 and has a smaller amount of convective heat (heat discharged to the outside from the sealing tool 10) than the pouch casing sealing portion 11. Therefore, in the sealing tool 10, the thermal insulation coating layer 40 positioned on the lead sealing portion 12 may have a smaller thickness than the thermal insulation coating layer 40 positioned on the pouch casing sealing portion 11.

Because the thermal insulation coating layer 40 positioned on the pouch casing sealing portion 11 has a larger thickness than the thermal insulation coating layer 40 positioned on the lead sealing portion 12, the convective heat of the lead sealing portion 12 is smaller in amount than the convective heat of the pouch casing sealing portion 11, such that the temperature of the sealing tool 10 may be uniformly maintained. Further, because the temperature of the sealing tool 10 is uniformly maintained, the sealing quality of the pouch casing 1 may be uniformly maintained.

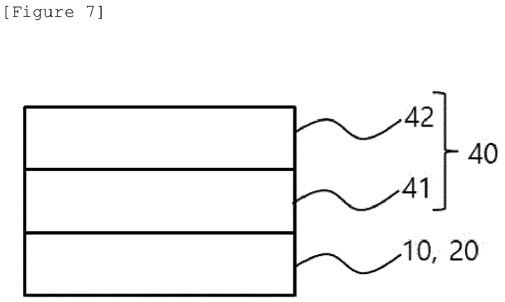

FIG. 7 is a schematic view illustrating a structure of the thermal insulation coating layers 40 according to the embodiment of the present invention.

The thermal insulation coating layer 40 may include a bonding layer 41 bonded to a base material such as the sealing tool 10 or the sealing block 20, and a thermal insulation layer 42 provided on one surface of the bonding layer 41 and configured to prevent heat in the base material from being discharged to the outside. For example, the bonding layer 41 may include any one or more of NiCoCrAlY, NiCrAlY, and CoCrAlY so that a phase of the bonding layer 41 is not changed by a temperature of the base material. Further, for example, the thermal insulation layer 42 may include any one or more of stabilized zirconia, yttria, and aluminum oxide.

The sealing block 20 heats the sealing tool 10 or supports the pouch casing 1. The sealing block 20 may be provided as a pair of sealing blocks 20.

In the embodiment, the sealing tool 10 may be positioned on one surface of the sealing block 20. In this case, the sealing block 20 may serve to heat the sealing tool 10 and does not come into contact with the pouch casing 1.

In another embodiment, the sealing tool 10 may not be positioned on one surface of the sealing block 20. In this case, the sealing block 20 may support the pouch casing 1 in which the electrode assembly is accommodated. In more detail, the sealing block 20 may support the sealing region of the pouch casing 1.

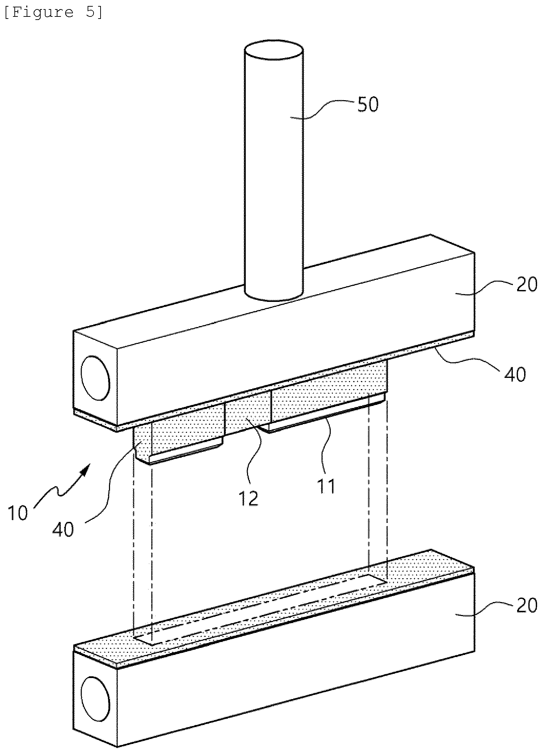

FIG. 5 is a perspective view illustrating the apparatus 100 for sealing a secondary battery according to another embodiment of the present invention.

With reference to FIG. 1, both the pair of sealing blocks 20 may each be configured as the sealing block 20 according to the embodiment.

Alternatively, with reference to FIG. 5, one of the sealing blocks 20 may be provided as the sealing block 20 according to the embodiment, and the other of the sealing blocks 20 may be provided as the sealing block 20 according to another embodiment. In this case, in the sealing block 20 according to another embodiment, the thermal insulation coating layer 40 is not positioned in a region corresponding to the sealing tool 10 of the sealing block 20 according to the embodiment. Therefore, according to the sealing block 20 according to another embodiment, the region corresponding to the sealing tool 10 may heat the pouch casing 1 while supporting the pouch casing 1.

The apparatus 100 for sealing a secondary battery may further include movable members 50 configured to move the sealing blocks 20 upward or downward. The movable members 50 serve to move the sealing block 20 to press the pouch casing 1. The movable member 50 may be provided on the other surface of the sealing block 20, i.e., the surface opposite to the surface on which the sealing tool 10 is positioned.

For example, in case that both the pair of sealing blocks 20 is each implemented as the sealing block 20 according to the embodiment, the movable members 50 may be respectively provided on both the pair of sealing blocks 20.

Alternatively, in case that the pair of sealing blocks 20 is respectively implemented as the sealing block 20 according to the embodiment and the sealing block 20 according to another embodiment, the movable member 50 may be provided only on one of the pair of sealing blocks 20. In this case, the sealing block 20 according to the embodiment may be positioned on an upper portion of the pouch casing 1, and the pouch casing 1 may be mounted on one surface of the sealing block 20 according to another embodiment.

Alternatively, in case that the pair of sealing blocks 20 is respectively implemented as the sealing block 20 according to the embodiment and the sealing block 20 according to another embodiment, the movable members 50 may be provided on both the pair of sealing blocks 20.

The thermal insulation coating layer 40 may be positioned on the surface of the sealing block 20 on which the sealing tool 10 is not positioned in order to prevent the convective heat from being generated through the surface on which the sealing tool 10 is not positioned. The thermal insulation coating layer 40 may be positioned on the lateral and lower surfaces of the sealing block 20 and the portion where the sealing tool 10 is not positioned at the side at which the sealing tool 10 is provided. The lateral surface of the sealing block 20 means the surface perpendicular to the surface on which the sealing tool 10 is provided. The lower surface means the surface opposite to the surface on which the sealing tool 10 is positioned.

The thermal insulation coating layer 40 positioned on the lateral and lower surfaces of the sealing block 20 may be bonded to the lateral surface of the sealing block 20. Alternatively, the thermal insulation coating layer 40 may be provided as a casing having a shape corresponding to the lateral and lower surfaces of the sealing block 20 and attached to or detached from the sealing block 20.

The apparatus 100 for sealing a secondary battery according to the present invention includes the heating member 30 configured to heat the sealing block 20. The heating member 30 may be positioned in the sealing block 20. Therefore, the sealing block 20 may include a space into which the heating member 30 is inserted.

For example, the sealing block 20 may have a hollow cylindrical space formed in the length direction. Further, the heating member 30 may be formed in a cylindrical shape or a coil shape and inserted into the hollow space of the sealing block 20.

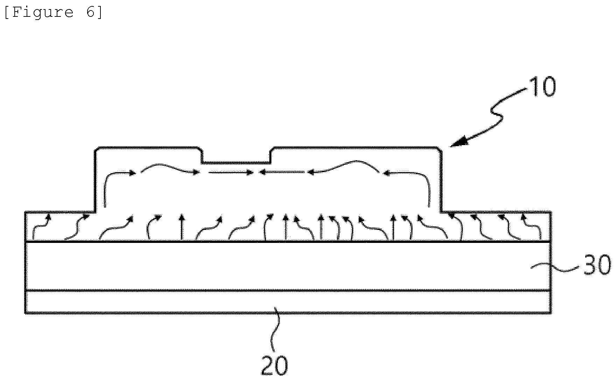

FIG. 6 is a cross-sectional view illustrating a state in which heat generated by the heating member 30 according to the embodiment of the present invention is transferred to the sealing block 20 and the sealing tool 10.

The heating member 30 may heat the sealing block 20, and the heated sealing block 20 may heat the sealing tool 10 being in direct contact with one surface. Further, the thermal insulation coating layer 40 positioned on the surface of the sealing block 20 and the surface of the sealing tool 10 may prevent the heat in the sealing block 20 and the sealing tool 10 from being discharged to the outside.

While the present invention has been described above with reference to the exemplary embodiments, it may be understood by those skilled in the art that the present invention may be variously modified and changed without departing from the spirit and scope of the present invention disclosed in the claims.

## Claims

1. An apparatus for sealing a secondary battery, which manufactures a secondary battery by sealing an outer peripheral surface of a pouch casing embedded with an electrode assembly, the apparatus comprising:
a sealing tool configured to seal the outer peripheral surface of the pouch casing and having a thermal insulation coating layer positioned on a lateral surface of the sealing tool;
a pair of sealing blocks configured to heat the sealing tool or support the pouch casing; and
a heating member positioned in the sealing block and configured to heat the sealing block.

2. The apparatus of claim 1, wherein the secondary battery comprises an electrode lead extending to the outside of the pouch casing, and
wherein the sealing tool comprises:
a pouch casing sealing portion configured to press and heat a pouch casing region in which the electrode lead is not positioned; and
a lead sealing portion configured to press and heat a region in which the electrode lead is positioned.

3. The apparatus of claim 2, wherein a height of the lead sealing portion is lower than a height of the pouch casing sealing portion.

4. The apparatus of claim 2, wherein the thermal insulation coating layer positioned on the lead sealing portion is thinner than the thermal insulation coating layer positioned on the pouch casing sealing portion.

5. The apparatus of claim 1, wherein the thermal insulation coating layer is positioned on an outer surface of the sealing block, except for a region in which the sealing tool is positioned.

6. The apparatus of claim 1, wherein the thermal insulation coating layer comprises a bonding layer provided on one surface thereof and bonded to the sealing tool.

7. The apparatus of claim 1, wherein the sealing block has a space into which the heating member is inserted.

8. The apparatus of claim 1, wherein the heating member is provided in the form of a rod or coil.

9. The apparatus of claim 1, wherein the sealing tool is positioned on one surface of any one of or both the pair of sealing blocks.

10. The apparatus of claim 1, wherein any one of or both the pair of sealing blocks further comprise a movable member configured to move the sealing block upward or downward.
